# EUROPÄISCHE PATENTSCHRIFT

(11) **EP 1 925 842 B1**
(45) Veröffentlichungstag und Bekanntmachung des Hinweises auf die Patenterteilung: **04.11.2009**
(21) Anmeldenummer: 07033559.1
(22) Anmeldetag: 17.11.2007
(51) Int. Cl.: F16D 65/00

(54) **Dämpfungsblech für eine Scheibenbremse**
Disc brake damping plate
Tôle d'amortissement pour un frein à disque

(30) Priorität: 21.11.2006 DE 102006054751
(43) Veröffentlichungstag der Anmeldung: 28.05.2008
(73) Patentinhaber: TMD Friction Services GmbH, 51381 Leverkusen (DE)
(72) Erfinder: Degenstein, Thomas, 64287 Darmstadt (DE); Örter, Gökhan, 35789 Weilmünster (DE)
(74) Vertreter: Müller, Eckhard

(56) Entgegenhaltungen:
- EP-A- 0 748 947
- WO-A-99/23393
- DE-A1- 10 230 008
- US-A- 5 499 705

## Beschreibung

Die vorliegende Erfindung betrifft ein Dämpfungsblech für Scheibenbremsen zur Reduzierung und/oder zur Kontrolle mechanischer Schwingungen einer Scheibenbremsanlage.

### Stand der Technik

Bei Scheibenbremsen kann oftmals eine unerwünschte und störende Geräuschentwicklung beobachtet werden, die gerne auch als Bremsenquietschen bezeichnet wird. Der Grund für diese Geräuschentwicklungen wird in einem Auftreten selbst erregter Schwingungen gesehen, die durch von den Reibkräften verursachte Instabilitäten hervorgerufen werden können. Ein solch selbst erregtes Bremssystem schwingt unter Einwirkung von Nichtlinearitäten letztendlich in einem Grenzbereich.

Gründe für diese Instabilität finden sich zum Beispiel in der Abhängigkeit der Reibeigenschaften von der Geschwindigkeit oder in einer Änderung der Kontaktgeometrie zwischen Bremsscheibe und Bremsbelägen, die zu einer veränderten Reibkraft führt. Weiterhin sind sogenannte Flatter-Instabilitäten bekannt, die auch bei konstantem Reibwert auftreten kann.

Eine kostengünstig und einfach zu realisierende Möglichkeit zur Verringerung von Schwingungsvorgängen in einer Scheibenbremsvorrichtung besteht in der Verwendung von Dämpfungsblechen.

Dämpfungsbleche der eingangs genannten Art finden vornehmlich in Scheibenbremsen von Fahrzeugen Verwendung. Diese sollen einen Bremskolben schwingungsmäßig von einer Belagträgerplatte abkoppeln und einen metallischen Kontakt zwischen diesen beiden Bauteilen verhindern. Das Dämpfungsblech ist daher zumeist an der Unterseite einer Belagträgerplatte vorgesehen, an deren Oberseite der auf die Bremsscheibe einwirkende Reibbelag angeordnet ist.

Aus der EP 0 748 947 A1 als auch der EP 0 744 558 A1 sind bereits aktive schwingungsdämpfende Systeme für Scheibenbremsen bekannt. Diesen Systemen ist gemein, dass sie auf einer Seite der Bremsscheibe, zum Beispiel der Kolbenseite, einen Schwingungssensor und auf der jeweils gegenüberliegenden Seite der Bremsscheibe, zum Beispiel der Faustseite, einen Aktor oder Aktuator aufweisen.

Die Ansteuerung des Aktuators erfolgt auf der Basis der vom Sensor ermittelten Schwingungssignale. Die als piezoelektrische Elemente ausgebildeten Sensoren und Aktoren sind zwischen einem Bremsbelag einerseits und einem Druckkolben andererseits angeordnet.

Derartige aktiv vibrationsdämpfende Systeme für Scheibenbremsen sind relativ aufwändig in der Herstellung und in der Wartung. Zudem müssen beiderseits der Bremsscheibe ein Aktor-Sensor-Paar angeordnet und mit entsprechenden Steuerungs- oder Detektionsmodulen elektrisch leitend verbunden werden. So erfordert auch das Auswechseln zerschlissener Bremsbeläge ein Herausnehmen und nachträgliches Wiedereinsetzen der Sensoren und Aktoren, was zu einem erhöhten Arbeitsaufwand führt.

### Aufgabe

Der vorliegenden Erfindung liegt daher die Aufgabe zugrunde, eine verbesserte Schwingungsdämpfung und Schwingungskontrolle für Scheibenbremsen zur Verfügung zu stellen, die unter Kosteneinsparung, einem verringerten Arbeitsaufwand sowie unter einer Reduzierung von Bauteilen hergestellt werden kann und leichter zu warten ist.

### Erfindung und vorteilhafte Wirkungen

Die der Erfindung zugrunde liegende Aufgabe wird mittels eines Dämpfungsblechs gemäß Patentanspruch 1 sowie einer Scheibenbremsvorrichtung gemäß Anspruch 8 gelöst. Weitere vorteilhafte Ausführungsformen der Erfindung sind in den jeweiligen Unteransprüchen angegeben.

Das für eine Scheibenbremse vorgesehene erfindungsgemäße Dämpfungsblech ist zur Anbringung an der Rückseite bzw. Unterseite einer Belagträgerplatte ausgebildet, an deren Vorderseite bzw. Oberseite sich der mit der Bremsscheibe in Eingriff bringbare Reibbelag befindet.

Das an der Unterseite der Belagträgerplatte vorgesehene Dämpfungsblech weist zumindest eine piezoelektrische Schicht auf. Demgemäß ist das Dämpfungsblech nach der Erfindung als aktiv schwingungsdämpfendes Element ausgebildet. Das Dämpfungsblech kann somit die Funktionen vorbekannter Dämpfungsbleche mit denen aktiv schwingungsdämpfender Systeme in einfacher Art und Weise kombinieren und so ein universell verwendbares, hocheffizientes Bauteil zur Verfügung stellen, welches, je nach Konfiguration, unterschiedlichen Anforderungsprofilen angepasst werden kann.

Das Einbringen oder Aufbringen der piezoelektrischen Schicht in das oder auf das Dämpfungsblech kann mittels gängiger Beschichtungsverfahren erfolgen. Eine separate und aufwändige Montage piezoelektrischer Elemente in einer Bremsvorrichtung, beispielsweise zwischen Belagträgerplatte und Kolben, ist daher nicht mehr nötig, da eine piezoelektrische Schicht nunmehr unmittelbar am Bremsbelag vorgesehen ist.

Die piezoelektrische Schicht erstreckt sich vorzugsweise homogen über die gesamte Fläche des Dämpfungsblechs.

Nach einer ersten vorteilhaften Ausführungsform der Erfindung ist die piezoelektrische Schicht zur Erfassung mechanischer Beanspruchungen und/oder zur Erfassung mechanischer Schwingungen ausgebildet. Entsprechend der auf die piezoelektrische Schicht einwirkenden mechanischen Beanspruchung erzeugt diese eine elektrische Spannung, die von einer Kontroll- oder Steuereinheit ausgewertet werden kann, welche elektrisch leitend mit dem Dämpfungsblech bzw. mit der piezoelektrischen Schicht verbunden ist.

In entsprechender Art und Weise kann die piezoelektrische Schicht auch als Aktor ausgebildet sein. Dieser ist dann an ein Steuer- oder Kontrollmodul angeschlossen und kann unter Beaufschlagung entsprechender elektrischer Signale für eine Längenkontraktion oder -dilatation Verwendung finden.

Nach einer weiteren bevorzugten Ausführungsform der Erfindung ist die piezoelektrische Schicht sowohl als Sensor als auch als Aktor ausgebildet. Sie kann beispielsweise in aufeinanderfolgenden zeitlichen Intervallen wechselweise als Sensor und als Aktor betrieben werden. So ist die piezoelektrische Schicht sowohl in einem Aktormodus als auch in einem Sensormodus betreibbar. Ein Umschalten zwischen Sensormodus und Aktormodus erfolgt über entsprechende elektrische Signale, die vom Steuer- oder Kontrollmodul der piezoelektrischen Schicht zugeführt werden können.

Weiterhin ist denkbar, dass im Dämpfungsblech mehrere übereinanderliegende und elektrisch voneinander isolierte piezoelektrische Schichten angeordnet sind, die gleichzeitig in unterschiedlichen Betriebsmodi betrieben werden können. Während eine der piezoelektrischen Schichten mechanische Schwingungen in elektrische Signale umwandelt, kann die andere oder können weitere piezoelektrische Schichten als mechanische Aktoren oder Aktuatoren fungieren.

Nach einer weiteren vorteilhaften Ausführungsform ist vorgesehen, dass die piezoelektrische Schicht als piezokeramische Schicht ausgebildet ist. Solche Piezokeramiken eignen sich in besonderer Art und Weise sowohl als Sensor als auch als Aktuator. Der piezoelektrische Effekt ist in diesen Materialien besonders gut umkehrbar. Sie eignen sich in nahezu gleicher Weise zur Umwandlung einer mechanischen Kraft in ein elektrisches Signal als auch umgekehrt für die Umwandlung elektrischer Signale in mechanische Kräfte. Beispiele für infrage kommende piezoelektrische Keramiken sind beispielsweise Bleizirkonat, Bleititanat, Bariumtitanat und dergleichen ferroelektrische Materialien.

Weiterhin ist vorgesehen, dass die zumindest eine piezoelektrische Schicht an zumindest eine Dämpfungsschicht des Dämpfungsblechs angrenzt und/oder von einer Dämpfungsschicht umschlossen oder in eine solche eingebettet ist.

Die Dämpfungsschicht weist hierbei zum Beispiel den typischen dreischichtigen Aufbau auf. Sie besteht beispielsweise aus dem eigentlichen Blech, einer Klebschicht zur Befestigung des Blechs auf der Belagträgerplatte und einer Gummi-, Kunststoff- oder Lackschicht, die eine Dämpfungsschicht zwischen dem Kolben und dem Bremsbelag bildet. Auf diese Art und Weise kann das erfindungsgemäße Dämpfungsblech sowohl aktiv als auch passiv zur Schwingungsdämpfung oder Schwingungskontrolle einer Scheibenbremse beitragen.

Die Integration einer piezoelektrischen Schicht in das Dämpfungsblech bzw. die Realisierung des Dämpfungsbleches als piezokeramische Schicht hat den Vorteil, dass auch herkömmliche Scheibenbremsen durch bloßes Austauschen von Bremsbelägen mit erfindungsgemäßen Dämpfungsblech in besonders einfacher und kosteneinsparender Weise nachgerüstet werden können.

Nach einem weiteren unabhängigen Aspekt betrifft die Erfindung einer Scheibenbremsvorrichtung mit zumindest einer Bremsscheibe und zumindest einer hydraulischen Betätigungseinrichtung, welche zum Andrücken eines Bremsbelags an die Bremsscheibe ausgebildet ist. Hierbei weist das an einer der Bremsscheibe abgewandten Seite einer Trägerplatte angeordnete Dämpfungsblech zumindest eine piezoelektrische Schicht im Sinne der Erfindung auf.

Dadurch, dass das Dämpfungsblech eine multifunktionale piezoelektrische Schicht aufweist, kann das Dämpfungsblech in einer entsprechend vielseitigen Art und Weise verwendet werden. So kann ein erfindungsgemäßes Dämpfungsblech bzw. ein das Dämpfungsblech aufweisender Bremsbelag alternativ entweder an der Faustseite oder an der Kolbenseite der Scheibenbremse vorgesehen werden.

Natürlich ist es auch möglich, auf beiden Seiten der Scheibenbremse, nämlich, sowohl an der Faustseite als auch an der Kolbenseite einen entsprechenden Bremsbelag mit dem erfindungsgemäßen Dämpfungsblech anzuordnen.

### Ausführungsbeispiele

Weitere Ziele, Merkmale, Eigenschaften sowie vorteilhafte Anwendungsmöglichkeiten der vorliegenden Erfindung ergeben sich aus der nachfolgenden Beschreibung von Ausführungsbeispielen anhand der Zeichnungen. Dabei bilden sämtliche beschriebenen und/oder bildlich dargestellten Merkmale in ihrer sinnvollen Kombination den Gegenstand der vorliegenden Erfindung, auch unabhängig von den Patentansprüchen oder deren Rückbeziehung. Es zeigen:
- Figur 1: einen schematischen Querschnitt durch ein Dämpfungsblech nach einer ersten Ausführung,
- Figur 2: einen schematischen Querschnitt durch ein Dämpfungsblech gemäß einer zweiten Ausführung,
- Figur 3: einen schematischen Querschnitt durch ein als piezoelektrische Keramik ausgebildetes Dämpfungsblech und
- Figur 4: eine schematische Querschnittsdarstellung eines Bremsbelags.

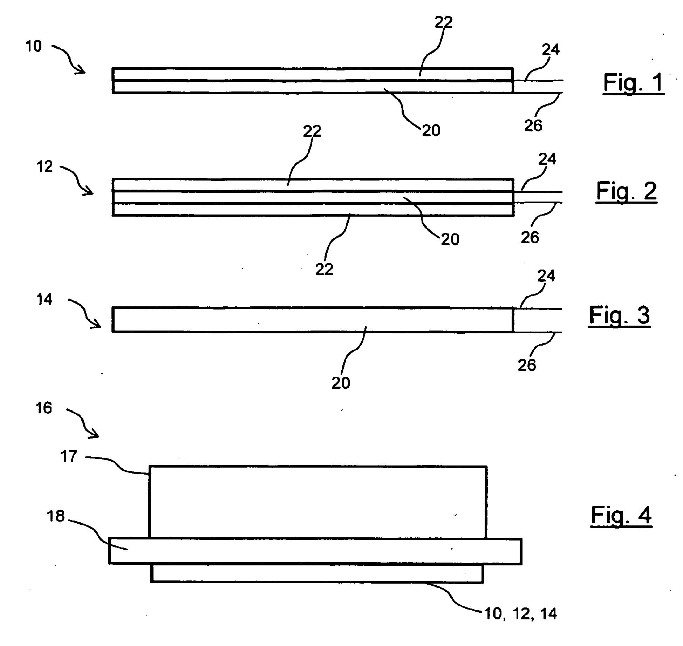

Figur 1 zeigt eine erste Ausführungsform eines Dämpfungsblechs 10 im Querschnitt. Das Dämpfungsblech 10, welches einen Großteil der Unterseite der Belagträgerplatte 18 abdeckt, weist zwei Schichten 20 und 22 auf. Während die Schicht 22 als passiv schwingungsdämpfende Schicht ausgebildet ist, besteht die Schicht 20 im Wesentlichen aus einem piezoelektrischen Material, wie etwa einer piezoelektrischen Keramik.

Diese Schicht 20 ist als aktiv schwingungsdämpfende Schicht und/oder als Sensor ausgebildet. Zur Übermittlung elektrischer Signale zwischen der piezoelektrischen Schicht 20 und einer (nicht explizit dargestellten) Steuer- oder Kontrolleinheit sind zwei elektrische Leiter 24 und 26 vorgesehen. Diese übermitteln entweder die von der Schicht 20 generierbaren elektrischen Signale an die Steuer- oder Kontrolleinheit. Gleichermaßen dienen diese Kontakte 24, 26 der Übermittlung von Steuersignalen an die als Aktor zu betreibende piezoelektrische Schicht 20.

Die passiv dämpfende Schicht 22 kann des Weiteren mehrschichtig aufgebaut sein. Sie kann beispielsweise eine Klebschicht zur Befestigung des Dämpfungsblechs an der Trägerplatte 18 und für eine passive Schwingungsdämpfung ebenso eine Gummi-, Kunststoff- oder Lackschicht zur mechanischen Entkopplung von Kolben oder Faust und dem Bremsbelag aufweisen.

In Figur 1 ist die passiv dämpfende Schicht 22 oberhalb der piezoelektrischen Schicht 20 angeordnet. Diese Art der Anordnung ist nicht zwingend. So sind umgekehrte Anordnungen von passiver Dämpfungsschicht 22 und aktiver piezoelektrischer Schicht 20 denkbar, wie auch eine beliebige Anordnung einer Klebschicht. Diese kann beispielsweise auch unmittelbar zwischen piezoelektrischer Schicht 20 und der Unterseite der Trägerplatte 18 angeordnet sein.

Bei der Ausführungsform nach Figur 2 weist das Dämpfungsblech 12 insgesamt drei Schichten auf, von denen zwei Schichten 22 als passive Dämpfungsschicht und eine dazwischenliegende Schicht 20 als aktive piezoelektrische Schicht ausgebildet sind. Bei dieser Ausführungsform ist die piezoelektrische Schicht 20 sozusagen von der Dämpfungsschicht 22 umschlossen oder in diese eingebettet.

Weitere Ausführungsformen mit einer Vielzahl übereineinanderliegender piezoelektrischer Schichten 20, die jeweils durch eine passive Dämpfungsschicht 22 voneinander getrennt, zumindest aber elektrisch voneinander isoliert sind, können ebenfalls vorgesehen werden.

Figur 3 zeigt schließlich ein Dämpfungsblech 14, welches im Wesentlichen vollständig von einer piezoelektrischen Schicht 20 gebildet wird. Selbstredend weist auch dieses Dämpfungsblech 14 eine nicht explizit dargestellte Klebeschicht auf, mit welcher das Dämpfungsblech 14 an der Unterseite der Belagträgerplatte 18 befestigt werden kann.

In Figur 4 ist schließlich ein Bremsbelag 16 im Querschnitt dargestellt. An der Oberseite der Belagträgerplatte 18 ist ein mit der Bremsscheibe in Eingriff bringbarer Reibbelag 17 angeordnet, während an der Unterseite der Belagträgerplatte 18 die unterschiedlich ausgebildeten Dämpfungsbleche 10, 12, 14 gemäß der Figuren 1 bis 3 je nach den spezifischen Anforderungen der Bremse angeordnet werden können.

### Bezugszeichenliste

- 10: Dämpfungsblech
- 12: Dämpfungsblech
- 14: Dämpfungsblech
- 16: Bremsbelag
- 17: Reibbelag
- 18: Trägerplatte
- 20: Piezoelektrische Schicht
- 22: Dämpfungsschicht
- 24: Elektrischer Leiter
- 26: Elektrischer Leiter

## Patentansprüche

1. Dämpfungsblech für eine Scheibenbremse, welches zur Anbringung an der Unterseite einer Belagträgerplatte vorgesehen ist, die an ihrer Oberseite mit einem Reibbelag verbunden ist, **dadurch gekennzeichnet, dass** das Dämpfungsblech (10, 12, 14) zumindest eine aktiv schwingungsdämpfende piezoelektrische Schicht (20) und eine passiv schwingungsdämpfende Schicht (22) aufweist.

2. Dämpfungsblech nach Anspruch 1, **dadurch gekennzeichnet, dass** die piezoelektrische Schicht (20) zur Erfassung mechanischer Beanspruchungen und/oder Schwingungen ausgebildet ist.

3. Dämpfungsblech nach einem der vorhergehenden Ansprüche, **dadurch gekennzeichnet, dass** die piezoelektrische Schicht (20) als Aktor ausgebildet ist.

4. Dämpfungsblech nach einem der vorhergehenden Ansprüche, **dadurch gekennzeichnet, dass** die piezoelektrische Schicht (20) sowohl als Sensor als auch als Aktor ausgebildet ist.

5. Dämpfungsblech nach einem der vorhergehenden Ansprüche, **dadurch gekennzeichnet, dass** die piezoelektrische Schicht (20) in einem Aktormodus und in einem Sensormodus betreibbar ist.

6. Dämpfungsblech nach einem der vorhergehenden Ansprüche, **dadurch gekennzeichnet, dass** die piezoelektrische Schicht (20) als piezokeramische Schicht ausgebildet ist.

7. Dämpfungsblech nach einem der vorhergehenden Ansprüche, **dadurch gekennzeichnet, dass** die piezoelektrische Schicht (20) an zumindest die Dämpfungsschicht (22) des Blechs (10; 12) angrenzt und/oder von dieser Dämpfungsschicht (22) umschlossen ist.

8. Scheibenbremsvorrichtung mit zumindest einer Bremsscheibe, zumindest einer hydraulischen Betätigungseinrichtung zum Andrücken eines an einer Trägerplatte (18) angeordneten Bremsbelags (17) an die Bremsscheibe, einem an der Trägerplatte (18) an ihrer der Bremsscheibe abgewandten Seite vorgesehenen Dämpfungsblech (10; 12; 14) nach einem der vorhergehenden Ansprüche.

9. Scheibenbremsvorrichtung nach Anspruch 8, mit mindestens einem an der Faustseite und/oder an der Kolbenseite der Scheibenbremse vorgesehenen Dämpfungsblech (10; 12; 14) nach einem der vorhergehenden Ansprüche 1 bis 7.

## Claims

1. Damping plate for a disc brake, which is provided for mounting at the underside of a lining carrier plate connected at its upper side with a friction lining, **characterised in that** the damping plate (10, 12, 14) has at least one active vibration-damping piezoelectric layer (20) and passive vibration-damping layer (22).

2. Damping plate according to claim 1, **characterised in that** the piezoelectric layer (20) is constructed for detection of mechanical loads and/or vibrations.

3. Damping plate according to any one of the preceding claims, **characterised in that** the piezoelectric layer (20) is constructed as an actuator.

4. Damping plate according to any one of the preceding claim, **characterised in that** the piezoelectric layer (20) is constructed not only as a sensor, but also as an actuator.

5. Damping plate according to any one of the preceding claims, **characterised in that** the piezoelectric layer (20) is operable in an actuator mode and in a sensor mode.

6. Damping plate according to any one of the preceding claims, **characterised in that** the piezoelectric layer (20) is constructed as a piezoceramic layer.

7. Damping plate according to any one of the preceding claims, **characterised in that** the piezoelectric layer (20) adjoins at least the damping layer (22) of the plate (10; 12) and/or is surrounded by this damping layer (22).

8. Disc brake device with at least one brake disc, at least one hydraulic actuating device for pressing against the brake disc a brake lining (17) arranged at a carrier plate (18), and a damping plate (10; 12; 14) according to any one of the preceding claims provided at the carrier plate (18) at the side thereof remote from the brake disc.

9. Disc brake device according to claim 8, with at least one damping plate (10; 12; 14) according to any one of the preceding claims 1 to 7 provided at the stub-axle side and/or at the piston side of the disc brake.

## Revendications

1. Tôle d'amortissement pour frein à disque, prévue pour être installée sur le côté inférieur d'une plaque porte-garniture dont le côté supérieur est relié à une garniture de frottement,
**caractérisée en ce que**
la tôle d'amortissement (10, 12, 14) présente au moins une couche piézoélectrique (20) qui amortit activement les vibrations et une couche (22) qui amortit passivement les vibrations.

2. Tôle d'amortissement selon la revendication 1, **caractérisée en ce que** la couche piézoélectrique (20) est configurée pour détecter les sollicitations mécaniques et/ou les vibrations.

3. Tôle d'amortissement selon l'une des revendications précédentes, **caractérisée en ce que** la couche piézoélectrique (20) est configurée comme actionneur.

4. Tôle d'amortissement selon l'une des revendications précédentes, **caractérisée en ce que** la couche piézoélectrique (20) est configurée à la fois comme détecteur et comme actionneur.

5. Tôle d'amortissement selon l'une des revendications précédentes, **caractérisée en ce que** la couche piézoélectrique (20) peut être utilisée en mode actionneur ou en mode détecteur.

6. Tôle d'amortissement selon l'une des revendications précédentes, **caractérisée en ce que** la couche piézoélectrique (20) est configurée comme couche piézocéramique.

7. Tôle d'amortissement selon l'une des revendications précédentes, **caractérisée en ce que** la couche piézoélectrique (20) est adjacente au moins à la couche d'amortissement (22) de la tôle (10; 12) et/ou est englobée par cette couche d'amortissement (22).

8. Système de frein à disque qui présente au moins un disque de frein, au moins un dispositif d'actionnement hydraulique qui repousse contre le disque de frein une garniture de frein (17) disposée sur une plaque de support (18) et une tôle d'amortissement (10; 12; 14) selon l'une des revendications précédentes prévue sur le côté de la plaque de support (18) non tourné vers le disque de frein.

9. Système de frein à disque selon la revendication 8, qui comprend au moins une tôle d'amortissement (10; 12; 14) selon l'une des revendications 1 à 7 qui précèdent, prévue sur le côté poussoir et/ou sur le côté piston du frein à disque.
